# FASCICULE DE BREVET EUROPEEN

(11) **EP 4 440 769 B1**
(45) Date de publication et mention de la délivrance du brevet: **20.08.2025**
(21) Numéro de dépôt: 22840250.9
(22) Date de dépôt: 30.11.2022
(51) Int. Cl.: B23P 15/26, B23K 9/167, B23K 9/173, B23K 20/02, B23K 20/04, B23K 20/24, F28D 7/10, F28F 1/30, F28F 1/00, F28F 19/06, B23K 101/14, B23K 103/04, B23K 103/02

(54) **PROCÉDÉ DE FABRICATION D'UNE PAROI D'ÉCHANGE DE CHALEUR À DOUBLE COUCHE**
VERFAHREN ZUR HERSTELLUNG EINER DOPPELSCHICHTIGEN WÄRMETAUSCHERWAND
METHOD FOR MANUFACTURING A DOUBLE-LAYERED HEAT EXCHANGE WALL

(30) Priorité: 02.12.2021 FR 2112871
(43) Date de publication de la demande: 09.10.2024
(73) Titulaire: Commissariat à l'Energie Atomique et aux Energies Alternatives, 75015 Paris (FR)
(72) Inventeur: SORNIN, Denis, 91280 SAINT PIERRE DU PERRAY (FR)
(74) Mandataire: Brevalex
(86) Numéro de dépôt international: PCT/FR2022/052198
(87) Numéro de publication internationale: WO 2023/099840

(56) Documents cités:
- EP-A2- 0 180 046
- CN-A- 111 347 146
- GB-A- 2 241 339
- US-A1- 2021 187 906

## Description

### Domaine technique

La présente invention se rapporte à un procédé de fabrication d'une paroi d'échange de chaleur à double couche, cette paroi à double couche étant notamment destinée à équiper des dispositifs du type échangeurs de chaleur.

De tels échangeurs de chaleur trouvent une application dans l'industrie chimique ou dans le domaine de l'énergie.

### État de la technique antérieure

Les échangeurs de chaleur sont des dispositifs permettant de transférer de l'énergie thermique d'un premier fluide vers un second fluide, sans les mélanger.

Différents types d'échangeurs de chaleur à deux fluides existent parmi lesquels ceux qui sont équipés d'une paroi d'échange de chaleur dite "à double couche" qui comprend deux couches qui sont d'épaisseur différente ou identique et destinées à venir en contact chacune avec l'un des fluides caloporteurs.

La structure particulière de la paroi à double couche présente l'avantage de conférer une sécurité renforcée à l'échangeur de chaleur qui en est équipé, dans la mesure où chaque couche assure, de manière redondante, une double fonction, à savoir la fonction d'étanchéité pour éviter que les deux fluides caloporteurs n'entrent en contact l'un avec l'autre et la fonction de résistance à la pression des fluides caloporteurs.

Cette double fonction est particulièrement importante, par exemple dans les cas où l'échangeur de chaleur équipe des installations, comme des réacteurs chimiques, dans lesquelles il faut assurer, de manière sûre et efficace, l'échange de chaleur entre un premier fluide tel que des métaux ou sels métalliques fondus réactifs, par exemple à base de sodium, du lithium ou de potassium, et un second fluide tel que de l'eau. En effet, toute défaillance de la paroi d'échange de chaleur équipant de telles installations engendrerait de graves conséquences sur l'exploitation en raison de la réactivité chimique du caloporteur avec le milieu à refroidir. Dans ce cas précis, les sollicitations en service, en sus de la pression statique des fluides et de la corrosion des surfaces, découlent des contraintes d'origine thermique et des sollicitations de fatigue imposées par les cycles de fonctionnement ou les vibrations induites par la thermo-hydraulique.

La plupart des parois d'échange de chaleur à double couche envisagent de laisser un jeu mécanique, ou interstice, entre les deux couches.

En reliant cet interstice à un système de détection, il devient alors possible de détecter la présence de fluide provenant du perçage de l'une des deux couches avant que l'intégrité de la seconde ne soit altérée.

Toutefois, la présence de cet interstice est particulièrement pénalisante au regard des propriétés de conductivité thermique de la paroi d'échange de chaleur et ne permet, en outre, pas de répondre de manière efficace à un hypothétique perçage simultané de la première couche et de la seconde couche le constituant.

Pour améliorer la conductivité thermique des parois d'échange de chaleur à double couche, il a été proposé de combler au moins partiellement l'interstice existant entre la première couche et la deuxième couche.

Ainsi, le document US 2013/0205861, référencé **[1]** dans la suite de la présente description, propose un procédé de fabrication d'une paroi d'échange de chaleur formée par un tube à double couche dans lequel, après une étape de polissage de la surface interne du tube externe ainsi que de la surface externe du tube interne, on interpose des fils tressés dans l'interstice formé par les tubes externe et interne puis on réalise un étirage ainsi qu'un traitement thermique.

Le document CN 203928838, référencé **[2],** propose un procédé de fabrication d'une paroi d'échange de chaleur également formée par un tube à double couche qui comprend une étape consistant à combler l'interstice entre les tubes interne et externe par une poudre métallique. En assurant une distribution radiale de la température, cette poudre métallique confère une bonne conductivité thermique au tube à double couche et permet également d'atténuer les risques de dégradation liés aux brusques transitions thermiques.

Le document US 2013/070889, référencé **[3],** propose un procédé de fabrication d'un tube à double couche mettant en œuvre une étape d'usinage à froid d'un ensemble formé par un tube interne inséré à l'intérieur d'un tube externe dans lequel :
- soit le tube externe, qui est en acier ferritique avec au moins 2 % en masse de chrome, comprend, au niveau de sa surface interne, une couche d'oxyde de calamine contenant du chrome d'épaisseur comprise entre 10 µm et 30 µm et le tube interne, qui est en acier ou en un alliage avec au moins 2 % en masse de chrome, comprend, au niveau de sa surface externe qui est usinée et/ou rectifiée sur une épaisseur d'au moins 0,1 mm, une couche de calamine,
- soit le tube interne, qui est en acier ferritique avec au moins 2 % en masse de chrome, comprend, au niveau de sa surface externe, une couche d'oxyde de calamine contenant du chrome d'épaisseur comprise entre 10 µm et 30 µm et le tube externe, qui est en acier ou en un alliage avec au moins 2 % en masse de chrome, comprend, au niveau de sa surface interne qui est usinée et/ou rectifiée sur une épaisseur d'au moins 0,1 mm, une couche de calamine.

L'étape d'usinage à froid mise en œuvre dans le procédé du documen**[3]** est réalisée de manière à atteindre un taux de réduction de 5 % à 30 % de l'épaisseur extérieure.

Le document GB 2 241 339, référencé **[4],** propose également un procédé de fabrication d'une paroi d'échange de chaleur comprenant trois tubes métalliques concentriques qui sont en contact intime, au niveau de leurs interfaces, de manière à assurer un bon contact thermique entre les trois tubes. Ce contact intime peut être obtenu par brasage ou par soudure. Dans le document**[4],** le tube intermédiaire peut être en un matériau à base de fer ou d'acier et les tubes intérieur et extérieur en cuivre ou en un alliage de cuivre.

S'ils améliorent les propriétés de conductivité thermique des tubes à double couche, les procédés de fabrication décrits dans les documents **[1]** à **[4]** présentent des conductivités thermiques trop pénalisantes pour l'exploitation visée.

Le but de la présente invention est, par conséquent, de proposer un procédé permettant de fabriquer une paroi d'échange de chaleur à double couche qui présente la double fonction d'étanchéité et de résistance à la pression des fluides caloporteurs, notamment en résistant à la propagation des défauts de fatigue, cette paroi d'échange à double couche offrant alors un maximum de garanties d'intégrité en service pour une pénalisation en conductivité thermique minimale.

### Exposé de l'invention

Le but précédemment énoncé ainsi que d'autres sont atteints par un procédé de fabrication d'une paroi d'échange de chaleur à double couche comprenant une première couche et une seconde couche, les première et seconde couches étant métalliques.

Selon l'invention et conformément à la revendication 1, le procédé de fabrication comprend les étapes (i) à (v), et éventuellement (vi), successives suivantes :
(i) la fourniture :
   - d'une première tôle destinée à former la première couche et présentant une épaisseur e₁,
   - d'une seconde tôle destinée à former la seconde couche et présentant une épaisseur e₂, et
   - d'un feuillard de fer Fe⁰ présentant une épaisseur e₃ comprise entre 10 µm et 100 µm et, avantageusement, comprise entre 50 µm et 100 µm ;
(ii) l'assemblage des première et seconde tôles et du feuillard de fer Fe⁰, le feuillard étant intercalé entre les première et seconde tôles ;
(iii) le pressage mécanique de l'assemblage obtenu à l'issue de l'étape précédente sous une pression minimale de 1 MPa ;
(iv) la soudure périphérique de l'assemblage pressé obtenu à l'issue de l'étape (iii) ;
(v) le traitement thermique de l'assemblage soudé obtenu à l'issue de l'étape (iv), ce traitement thermique étant réalisé par compression isostatique à chaud conduite à une température comprise entre 800 °C et 1200 °C, à une pression comprise entre 10⁸ Pa et 2.10⁸ Pa, pendant une durée comprise entre 1 h et 3 h ;
   et, le cas échéant,
(vi) un traitement complémentaire tel qu'un cintrage, un pliage, une trempe, un revenu normalisé ou un recuit.

Le procédé selon l'invention permet de former, entre les première et seconde couches, une interphase métallique en fer pur. Cette interphase, qui est ductile et dense et qui comble tout le volume initial de l'interstice existant entre les première et seconde tôles, permet ainsi d'assurer une jonction mécanique uniforme entre les première et seconde couches. L'absence de jeu entre ces première et seconde couches permet d'éviter le mouvement de ces deux couches l'une par rapport à l'autre : ces deux couches ne formant plus qu'une seule paroi, elles se déforment alors de la même manière qu'une paroi monolithique lors d'une sollicitation mécanique ou mise en forme ultérieure. Grâce au procédé de fabrication selon l'invention, on obtient une paroi à double couche présentant une qualité géométrique ne nécessitant pas de calibrage après l'étape de traitement thermique par compression isostatique à chaud.

L'interphase métallique en fer pur permet également de conférer à la paroi à double couche d'excellentes propriétés de conductivité thermique en assurant un très bon transfert thermique entre les première et seconde couches, ce qui a pour effet d'augmenter le rendement d'un échangeur thermique équipé d'une telle paroi à double couche. De manière inattendue et surprenante, les Inventeurs ont constaté que cette interphase ductile et dense en fer Fe⁰ assure une conductivité thermique qui est supérieure ou égale à 80 % de la conductivité thermique d'une paroi équivalente massive, voire supérieure à 95 % dans la cas particulier de la mise en œuvre du feuillard de fer Fe⁰.

Cette ductilité de l'interphase métallique en fer permet également de dévier et/ou d'arrêter la propagation des fissures de fatigue, en particulier de fatigue à grand nombre de cycles, qui se seraient formées et propagées au sein de l'une des deux couches, préservant ainsi l'intégrité de l'autre couche. En particulier, lorsque les fissures de fatigue sont déviées, elles se propagent dans l'interphase métallique ductile offrant ainsi une durée de vie prolongée de 30 % à température ambiante.

Cette interphase en fer se caractérise, en outre, par une étanchéité lui permettant d'éviter la propagation capillaire de fluide provenant d'une telle fissure entre les deux couches.

Le procédé selon l'invention permet de fabriquer une paroi à double couche présentant une épaisseur eₜₒₜ.

Le procédé selon l'invention comprend les étapes (i) à (v), et éventuellement (vi), mentionnées ci-dessus et détaillées ci-après.

Lors de l'étape (i) du procédé de fabrication selon l'invention, on fournit deux tôles, une première tôle qui est destiné à former la première couche de la paroi à double couche, et une seconde tôle qui est destinée à former la seconde couche de cette même paroi à double couche.

La première tôle présente une épaisseur, notée e₁, tandis que la seconde tôle présente une épaisseur, notée e₂.

Selon un mode de réalisation, l'épaisseur e₁ de la première tôle et l'épaisseur e₂ de la seconde tôle sont chacune comprises entre 1 mm et 30 mm, avantageusement comprises entre 1 mm et 5 mm et, préférentiellement, comprises entre 1 mm et 2 mm. Toutefois, bien que comprises dans des intervalles de valeurs identiques, les épaisseurs e₁ et e₂ des première et seconde tôles ne sont pas nécessairement identiques.

Il est précisé que l'expression "entre ... et ..." qui est utilisée ci-dessus mais également dans la suite de la présente description pour définir un intervalle, doit être comprise comme définissant non seulement les valeurs de l'intervalle, mais également les valeurs des bornes de cet intervalle.

Lors de l'étape (i) du procédé de fabrication selon l'invention, on fournit également un feuillard qui est constitué de fer au degré d'oxydation 0, c'est-à-dire de fer pur Fe⁰.

Ce feuillard de fer Fe⁰ présente une épaisseur, notée e₃, qui est comprise entre 10 µm et 100 µm et, avantageusement, comprise entre 50 µm et 100 µm.

Le procédé de fabrication selon l'invention comprend, après l'étape (i), une étape (ii) d'assemblage des première et seconde tôles et du feuillard de fer Fe⁰, le feuillard étant intercalé entre les première et seconde tôles.

En d'autres termes, à l'issue de l'étape (ii), on obtient un assemblage dans lequel le feuillard de fer Fe⁰ est pris en sandwich entre les première et seconde tôles.

Dans une variante de mise en œuvre du procédé de fabrication selon l'invention et conformément à la revendication 2, les étapes (i) et (ii) qui viennent d'être décrites peuvent être respectivement remplacées par les étapes (i') et (ii') suivantes :
(i') la fourniture :
   d'une première tôle destinée à former la première couche et présentant une épaisseur e₁, et
   d'une seconde tôle destinée à former la seconde couche et présentant une épaisseur e₂, cette seconde tôle comprenant, sur l'une de ses surfaces, un revêtement de fer Fe⁰ ; et
(ii') l'assemblage de la première tôle et de la seconde tôle revêtue, le revêtement de fer Fe⁰ étant placé entre les première et seconde tôles,

Lors de l'étape (i') de cette variante du procédé de fabrication selon l'invention, on fournit deux tôles, une première tôle qui est destinée à former la première couche de la paroi à double couche, et une seconde tôle qui est destinée à former la seconde couche de cette même paroi à double couche.

Comme précédemment, la première tôle présente une épaisseur, notée e₁, tandis que la seconde tôle présente une épaisseur, notée e₂.

Selon un mode de réalisation, l'épaisseur e₁ de la première tôle et l'épaisseur e₂ de la seconde tôle sont chacune comprises entre 1 mm et 30 mm, avantageusement comprises entre 1 mm et 5 mm et, préférentiellement, comprises entre 1 mm et 2 mm. Comme déjà indiqué précédemment, bien que comprises dans des intervalles de valeurs identiques, les épaisseurs e₁ et e₂ des première et seconde tôles ne sont pas nécessairement identiques.

Dans cette variante, la seconde tôle comprend, sur l'une de ses surfaces, un revêtement de fer au degré d'oxydation 0, c'est-à-dire de fer pur Fe⁰.

Ce revêtement de fer Fe⁰ présente une épaisseur, notée e₃, comprise entre 10 µm et 100 µm et, avantageusement, comprise entre 50 µm et 100 µm.

En d'autres termes, la seconde tôle revêtue présente une épaisseur, notée e_{2'}, telle que e_{2'} = e₂ + e₃.

Selon un mode de réalisation de cette variante du procédé de fabrication selon l'invention, le revêtement de fer Fe⁰ est obtenu par projection à froid ("cold spray" selon la terminologie anglo-saxonne) de poudre de fer Fe⁰ sur l'une des surfaces de la seconde tôle.

Dans cette variante, le procédé de fabrication selon l'invention comprend, après l'étape (i'), une étape (ii') d'assemblage de la première tôle et de la seconde tôle revêtue, le revêtement de fer Fe⁰ étant placé entre les première et seconde tôles.

En d'autres termes, à l'issue de l'étape (ii'), on obtient un assemblage dans lequel le revêtement de fer Fe⁰ est positionné entre les première et seconde tôles.

Le choix de la mise en œuvre d'un feuillard de fer Fe⁰ de 10 µm à 100 µm d'épaisseur tout comme celui de la réalisation, par projection à froid, d'un revêtement de fer Fe⁰ de 10 µm à 100 µm d'épaisseur permet de créer, entre les première et seconde couches, une interphase ductile en fer Fe⁰. Cette interphase ductile en fer Fe⁰ permet de ralentir et de dévier, de manière significative, la vitesse de propagation de fissures de fatigue qui se seraient formées au sein de l'une de ces deux couches et, par conséquent, d'augmenter jusqu'à 30 % la durée de vie en fatigue de l'autre couche (non endommagée) et, partant, de la paroi à double couche fabriquée par le procédé selon l'invention.

Comme on le verra dans les exemples ci-après, le choix se portera avantageusement sur la réalisation de l'interphase en fer à partir de l'intercalation d'un feuillard de fer Fe⁰ qui permet d'obtenir une paroi à double couche présentant des propriétés mécaniques et de conductivité thermique qui sont supérieures à celles d'une paroi à double couche dans lequel l'interphase en fer est obtenue par projection à froid d'une poudre de fer Fe⁰.

Dans une variante avantageuse, le procédé selon l'invention comprend, en outre, une étape de nettoyage des surfaces de la première tôle et des surfaces de la seconde tôle ou de la seconde tôle revêtue, cette étape de nettoyage étant mise en œuvre préalablement à l'étape (ii) ou (ii') d'assemblage.

Dans une autre variante avantageuse, le procédé selon l'invention comprend, en outre, une étape de rectification de la première tôle et de la seconde tôle, éventuellement revêtue, cette étape de rectification étant mise en œuvre préalablement à l'étape (ii) ou (ii') d'assemblage.

Le procédé de fabrication selon l'invention comprend, après l'étape (ii) ou (ii') d'assemblage, une étape (iii) de pressage mécanique de l'assemblage obtenu à l'issue de l'étape (ii) ou (ii'), ce pressage mécanique étant exercé sous une pression minimale de 1 MPa.

Le choix d'une telle étape (iii) de pressage mécanique présente l'avantage de réduire encore le volume de l'interstice existant entre la première tôle et la seconde tôle, éventuellement revêtue. Ce faisant, la quantité de gaz contenue entre ces deux tôles devient négligeable.

Le procédé de fabrication selon l'invention comprend, après l'étape (iii) de pressage mécanique, une étape (iv) de soudure périphérique de l'assemblage tel qu'obtenu à l'issue de l'étape (iii). Ce faisant, on obtient une soudure du pourtour des première et seconde tôles.

Cette étape (iv) de soudure, qui peut être conduite au moyen de n'importe quelle technique de soudure permettant d'obtenir une soudure étanche aux gaz, permet d'isoler l'interphase en fer Fe⁰ interposée entre les première et seconde tôles.

L'étape (iv) de soudure peut notamment être réalisée par laser, par baguette, par faisceau d'électrons ou encore, et de manière avantageuse, par un procédé de soudage à l'arc avec une électrode non fusible, le cas échéant en présence d'un métal d'apport. Ce dernier type de soudure peut en particulier être réalisé par soudure TIG (TIG étant l'acronyme de l'expression anglaise "Tungsten Inert Gas") sans métal d'apport.

La présence de l'interphase en fer Fe⁰ permet de ne pas affecter la composition des joints soudés ni la composition des première et seconde tôles qui conservent donc leurs propriétés mécaniques. Ce choix d'interphase en fer Fe⁰ permet, par conséquent, d'assurer un assemblage, au moyen d'une soudure fiable, des parois à double couche fabriquées par le procédé selon l'invention avec les structures d'un dispositif qu'elles sont destinées à équiper, par exemple avec celles d'un échangeur de chaleur. En effet, le fer Fe⁰ de l'interphase ne modifiant qu'à la marge la composition de la soudure périphérique, l'interphase n'altère, par conséquent, pas les propriétés mécaniques de cette soudure périphérique ainsi réalisée.

Le procédé de fabrication selon l'invention comprend, à l'issue de l'étape (iv) de soudure, une étape (v) de traitement thermique de l'assemblage soudé tel qu'obtenu à l'issue de l'étape (iv).

Cette étape (v) de traitement thermique est réalisée par compression isostatique à chaud (CIC) conduite à une température comprise entre 800 °C et 1200 °C, à une pression comprise entre 10⁸ Pa et 2.10⁸ Pa, pendant une durée comprise entre 1 h et 3 h.

Cette étape (v) de compression isostatique à chaud permet de souder, par diffusion, la première tôle et la second tôle, éventuellement revêtue et, ce faisant, d'obtenir une jonction mécanique uniforme entre ces première et second tôles. À l'issue de l'étape (v) de compression isostatique à chaud, cette jonction mécanique uniforme est formée par l'interphase en fer Fe.

Dans une variante avantageuse, le procédé selon l'invention comprend, en outre, au moins une étape de rectification de l'assemblage, cette ou ces étapes de rectification étant mises en œuvre préalablement à l'étape (iv) de soudure et/ou préalablement à l'étape (v) de traitement thermique.

Dans une variante particulièrement avantageuse, le procédé selon l'invention ne comprend pas d'étape de dégazage entre l'étape (iii) de pressage mécanique et l'étape (iv) de soudure et/ou ne comprend pas d'étape de dégazage entre l'étape (iv) de soudure et l'étape (v) de traitement thermique.

La suppression d'une ou de deux étapes de dégazage, qui sont particulièrement complexes à mettre en œuvre sur le plan industriel dans le cadre de la fabrication de parois à double couche, participe à une réduction significative des temps de cycles, coûts et délais de production.

Le procédé selon l'invention permet de fabriquer des parois à double couche de longueurs et de géométries variables.

Les matériaux du premier tube et du second tube (hors revêtement) peuvent être identiques ou différents. Ces matériaux peuvent notamment comprendre du fer.

Dans une variante avantageuse, les première et seconde tôles sont réalisées en un matériau comprenant du fer, ce matériau étant avantageusement choisi parmi le fer Fe⁰ et un acier, par exemple de l'acier martensitique comme l'Eurofer-97,

Dans une variante préférée, les matériaux des première et seconde tôles sont identiques,

Dans une variante, le procédé selon l'invention comprend, en outre, au moins une étape (vi) de traitement complémentaire. Un tel traitement complémentaire (vi) a notamment pour but de conférer une forme spécifique et/ou des propriétés mécaniques particulières à la paroi à double couche fabriquée par le procédé selon l'invention.

Ce traitement complémentaire (vi) peut, par exemple, être choisi parmi un cintrage, un pliage, une trempe, un revenu normalisé et un recuit, voire être une combinaison de traitements complémentaires (trempe suivie de revenu normalisé).

Grâce à un tel traitement complémentaire (vi), la paroi à double couche peut, par exemple, être conformée en un tube de section circulaire, carrée ou rectangulaire.

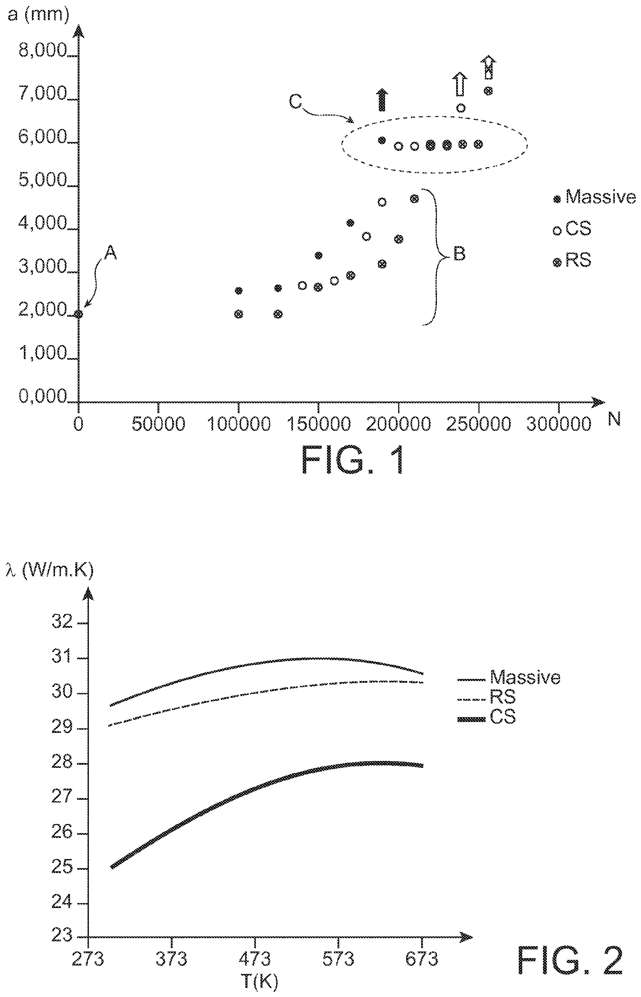

L'invention sera mieux comprise à la lumière du complément de description qui suit et qui se réfère aux figures 1 et 2 annexées.

Il est précisé que ce complément de description n'est donné qu'à titre d'illustration de l'objet de l'invention et qu'il ne doit en aucun cas être interprété comme une limitation de cet objet qui est défini par les revendications 1 à 11.

### Brève description des dessins

La figure 1 illustre l'évolution de la progression d'une fissure de fatigue (notée a et exprimée en mm), à température ambiante, en fonction du nombre de cycles (noté N) de deux parois à double couche obtenues par un procédé selon l'invention (notées RS et CS) et d'une paroi similaire massive de référence (notée Massive).
La figure 2 illustre l'évolution de la conductivité thermique équivalente (notée λ et exprimée en W/m.K) en fonction de la température (notée T et exprimée en K) de deux parois à double couche obtenues par un procédé selon l'invention (notées RS et CS) et d'une paroi similaire massive de référence (notée Massive).

### Exposé détaillé de modes de réalisation particuliers

### 1. Fabrication de parois à double couche par le procédé selon l'invention et d'une paroi de référence

### 1.1. Une première paroi à double couche, notée RS, a été fabriquée par le procédé selon l'invention,

On a procédé à un laminage de deux tôles en Eurofer-97 de manière à leur conférer une épaisseur de 6,00 mm (+0,0/-0,1 mm) pour la première tôle et une épaisseur de 4 mm (+0,0/-0,1 mm) pour la seconde tôle.

On a ensuite procédé à un laminage d'une tôle de fer métallique Fe⁰ jusqu'à obtenir un feuillard présentant une épaisseur de 100 µm.

Après rectification puis nettoyage des surfaces des deux tôles, on a procédé à l'assemblage en sandwich des deux tôles et du feuillard par interposition de ce feuillard de fer métallique entre les première et seconde tôles.

On a ensuite procédé au pressage mécanique de l'assemblage en exerçant une pression de 1 MPa au moyen d'une presse puis à la soudure périphérique par TIG sur tout le pourtour de l'assemblage.

L'assemblage ainsi soudé a alors été soumis à un traitement thermique par réalisation d'un cycle de compression isostatique à chaud (CIC) conduite à une température de 1100 °C, à une pression de 1200 bar (1,2.10⁸ Pa), pendant 1 h, puis à des traitements thermiques complémentaires de trempe après un maintien à une température de 980 °C pendant 30 min et de revenu à 760 °C pendant 90 min.

À l'issue de ces traitements thermiques, on obtient la paroi à double couche RS.

### 1.2. Une seconde paroi à double couche, notée CS, a été fabriquée par le procédé selon l'invention,

On a procédé à un laminage de deux tôles en Eurofer-97 de manière à leur conférer une épaisseur de 6,00 mm (+0,0/-0,1 mm) pour la première tôle et une épaisseur de 4 mm (+0,0/-0,1 mm) pour la seconde tôle.

On a ensuite procédé à un dépôt par pulvérisation à froid (cold spray) d'une poudre de fer métallique sur l'une des surfaces de la seconde tôle de manière à former un revêtement de fer d'une épaisseur de plus de 100 µm.

Après rectification du dépôt à une épaisseur de 100 µm puis nettoyage des surfaces des deux tôles, on a procédé à l'assemblage de la première tôle et de la seconde tôle revêtue, le revêtement de fer métallique étant positionné entre les première et seconde tôles.

L'assemblage ainsi obtenu a ensuite été soumis aux étapes de pressage mécanique, de soudure, de traitement thermique par CIC et de traitements thermiques complémentaires décrites au chapitre 1.1. ci-dessus.

À l'issue de ces traitements thermiques, on obtient la paroi à double couche CS.

### 1.3. Une paroi de référence, notée Massive, a également été réalisée.

On a procédé à un laminage d'une tôle en Eurofer-97 de manière à lui conférer une épaisseur de 10,00 mm (+0,0/-0,1 mm).

La tôle a ensuite été soumise aux étapes de traitement thermique par CIC et de traitements thermiques complémentaires décrites au chapitre 1.1. ci-dessus.

À l'issue de ces traitements thermiques, on obtient la paroi de référence Massive.

### 2. Caractérisation des parois à double couche RS et CS et de la paroi de référence Massive

2.1. Des éprouvettes de flexion 10 x 10 x 55 mm ont été prélevées dans chacune des parois RS, CS et Massive. Une entaille de 2 mm, repérée par le point A sur la Figure 1, a été pratiquée dans chacune des éprouvettes, respectivement notées RS, CS et Massive, afin de permettre l'amorçage d'une fissure de fatigue lors du chargement en fatigue.

On a ensuite examiné la propagation de cette entaille en soumettant les éprouvettes à des cycles de sollicitations en flexion 3 points à contrainte maximale constante de 60% de la limite d'élasticité du matériau des tôles. Un effort minimal de 150 N est maintenu afin de ne pas décoller l'outillage de l'éprouvette. Le trajet de la fissure est suivi *in situ* par corrélation d'image.

En référence à la zone marquée B sur la Figure 1, on observe que les éprouvettes RS et CS conformes à l'invention se caractérisent par une propagation retardée de la fissure par rapport à celle des éprouvettes de référence Massive.

En référence à la zone marquée C sur la Figure 1, on note également que les éprouvettes RS et CS conformes à l'invention présentent une stagnation de la longueur de la fissure au niveau de l'interphase (distance de propagation de 6 mm). Ceci conduit à un accroissement de la durée de vie des parois à double couche RS et CS par rapport à celle de la paroi de référence Massive.

Ces résultats mettent clairement en évidence que le choix d'une interphase ductile de Fe⁰ permet de modifier nettement la vitesse de propagation des fissures et d'augmenter significativement la durée de vie en fatigue à la température ambiante de la couche non endommagée.

2.2. On a mesuré la conductivité thermique de chacune des éprouvettes RS, CS et Massive.

En se reportant aux résultats illustrés sur la figure 2, on observe que les éprouvettes RS et CS fabriquées par le procédé conforme à l'invention présentent une conductivité thermique λ très proche de l'éprouvette de référence Massive et que ce coefficient de conductivité thermique représente au moins 80 % de la conductivité thermique de la paroi de référence Massive pour la paroi à double couche CS et près de 95 % pour la paroi à double couche RS.

### Bibliographie

[1] US 2013/0205861 A1
[2] CN 203928838 U
[3] US 2013/070889 A1
[4] GB 2 241 339 A

## Revendications

1. Procédé de fabrication d'une paroi d'échange de chaleur à double couche comprenant une première couche et une seconde couche, les première et seconde couches étant métalliques, ce procédé de fabrication étant **caractérisé en ce qu'**il comprend les étapes (i) à (v), et éventuellement (vi), successives suivantes :
(i) la fourniture :
. d'une première tôle destinée à former la première couche et présentant une épaisseur e₁,
. d'une seconde tôle destinée à former la seconde couche et présentant une épaisseur e₂, et
. d'un feuillard de fer Fe⁰ présentant une épaisseur e₃ comprise entre 10 µm et 100 µm et, avantageusement, comprise entre 50 µm et 100 µm ;
(ii) l'assemblage des première et seconde tôles et du feuillard de fer Fe⁰, le feuillard étant intercalé entre les première et seconde tôles ;
(iii) le pressage mécanique de l'assemblage obtenu à l'issue de l'étape précédente sous une pression minimale de 1 MPa ;
(iv) la soudure périphérique de l'assemblage pressé obtenu à l'issue de l'étape (iii) ;
(v) le traitement thermique de l'assemblage soudé obtenu à l'issue de l'étape (iv), ce traitement thermique étant réalisé par compression isostatique à chaud conduite à une température comprise entre 800 °C et 1200 °C, à une pression comprise entre 10⁸ Pa et 2.10⁸ Pa, pendant une durée comprise entre 1 h et 3 h ;
et, le cas échéant,
(vi) un traitement complémentaire tel qu'un cintrage, un pliage, une trempe, un revenu normalisé ou un recuit.

2. Procédé selon la revendication 1, dans lequel les étapes (i) et (ii) sont respectivement remplacées par les étapes (i') et (ii') suivantes :
(i') la fourniture :
. d'une première tôle destinée à former la première couche et présentant une épaisseur e₁, et
. d'une seconde tôle destinée à former la seconde couche et présentant une épaisseur e₂, cette seconde tôle comprenant, sur l'une de ses surfaces, un revêtement de fer Fe⁰, ce revêtement présentant une épaisseur e₃ comprise entre 10 µm et 100 µm et, avantageusement, comprise entre 50 µm et 100 µm, la seconde tôle revêtue présentant une épaisseur e_{2'} telle que e_{2'} = e₂ + e₃ ; et
(ii') l'assemblage de la première tôle et de la seconde tôle revêtue, le revêtement de fer Fe⁰ étant placé entre les première et seconde tôles.

3. Procédé selon la revendication 2, dans lequel le revêtement de fer Fe⁰ est obtenu par projection à froid de poudre de fer Fe⁰ sur l'une des surfaces de la seconde tôle.

4. Procédé selon l'une quelconque des revendications 1 à 3, dans lequel l'étape (iv) de soudure est réalisée par un procédé de soudage à l'arc avec une électrode non fusible, le cas échéant en présence d'un métal d'apport.

5. Procédé selon l'une quelconque des revendications 1 à 4, comprenant, en outre, une étape de nettoyage des surfaces de la première tôle et des surfaces de la seconde tôle revêtue, cette étape de nettoyage étant mise en œuvre préalablement à l'étape (ii) ou (ii') d'assemblage.

6. Procédé selon l'une quelconque des revendications 1 à 5, comprenant, en outre, une étape de rectification des première et seconde tôles, cette étape de rectification étant mise en œuvre préalablement à l'étape (ii) ou (ii') d'assemblage.

7. Procédé selon l'une quelconque des revendications 1 à 6, comprenant, en outre, au moins une étape de rectification de l'assemblage, cette ou ces étapes de rectification étant mises en œuvre préalablement à l'étape (iv) de soudure et/ou préalablement à l'étape (v) de traitement thermique.

8. Procédé selon l'une quelconque des revendications 1 à 7, lequel ne comprend pas d'étape de dégazage entre l'étape (iii) de pressage mécanique et l'étape (iv) de soudure et/ou entre l'étape l'étape (iv) de soudure et l'étape (v) de traitement thermique.

9. Procédé selon l'une quelconque des revendications 1 à 8, dans lequel les première et seconde tôles sont réalisées en un matériau comprenant du fer, ce matériau étant avantageusement choisi parmi le fer Fe⁰ et un acier.

10. Procédé selon l'une quelconque des revendications 1 à 9, dans lequel les matériaux des première et seconde tôles sont identiques.

11. Procédé selon l'une quelconque des revendications 1 à 10, dans lequel les épaisseurs e₁ et e₂ des première et seconde tôles sont comprises entre 1 mm et 30 mm, avantageusement comprises entre 1 mm et 5 mm et, préférentiellement, comprises entre 1 mm et 2 mm

## Patentansprüche

1. Verfahren zur Herstellung einer zweischichtigen Wärmeaustauschwand, die eine erste Schicht und eine zweite Schicht umfasst, wobei die erste und die zweite Schicht metallisch sind, wobei dieses Herstellungsverfahren **dadurch gekennzeichnet ist, dass** es die folgenden aufeinanderfolgenden Schritte (i) bis (v) und gegebenenfalls (vi) umfasst:
(i) Lieferung:
. eines ersten Blechs, das zur Bildung der ersten Schicht bestimmt ist und eine Dicke e₁ aufweist,
. eines zweites Blechs, das zur Bildung der zweiten Schicht bestimmt ist und eine Dicke e₂ aufweist, und
. eines Eisenbandes Fe⁰, das eine Dicke e₃ zwischen 10 µm und 100 µm, und vorteilhafterweise zwischen 50 µm und 100 µm, aufweist;
(ii) wobei bei der Verbindung der ersten und zweiten Bleche und des Eisenbandes Fe⁰, das Band zwischen die ersten und zweiten Bleche eingelegt ist;
(iii) mechanisches Pressen der Verbindung, die nach Abschluss des vorherigen Schritts unter einem Mindestdruck von 1 MPa erhalten wurde;
(iv) peripheres Verschweißen der in Schritt (iii) erhaltenen Pressverbindung ;
(v) Wärmebehandlung der Schweißverbindung, die am Ende von Schritt (iv) erhalten wird, wobei diese Wärmebehandlung durch isostatische Warmkompression bei einer Temperatur zwischen 800 °C und 1200 °C, bei einem Druck zwischen 10⁸ Pa und 2.10⁸ Pa, für eine Dauer zwischen 1 h und 3 h, erfolgt;
und gegebenenfalls
(vi) eine Zusatzbehandlung wie Biegen, Abkanten, Abschrecken, normalisiertes Anlassen oder Glühen.

2. Verfahren nach Anspruch 1, wobei die Schritte (i) und (ii) durch die folgenden Schritte (i') und (ii') ersetzt werden:
(i') Lieferung:
. eines ersten Blechs, das zur Bildung der ersten Schicht bestimmt ist und eine Dicke e₁ aufweist, und
. eines zweiten Blechs, das zur Bildung der zweiten Schicht bestimmt ist und eine Dicke e₂ aufweist, wobei dieses zweite Blech auf einer seiner Oberflächen eine Eisenbeschichtung Fe⁰ umfasst, wobei diese Beschichtung eine Dicke e₃ zwischen 10 µm und 100 µm, und vorteilhafterweise zwischen 50 µm und 100 µm, aufweist, wobei das zweite beschichtete Blech eine Dicke e_{2'} aufweist, wie e_{2'} = e₂ + e₃; und
(ii') Verbinden des ersten Blechs und des beschichteten zweiten Blechs, wobei die Eisenbeschichtung Fe⁰ zwischen dem ersten und dem zweiten Blech platziert ist.

3. Verfahren nach Anspruch 2, wobei die Eisenbeschichtung Fe⁰ durch Kaltspritzen von Eisenpulver Fe⁰ auf eine der Oberflächen des zweiten Blechs erhalten wird.

4. Verfahren nach einem der Ansprüche 1 bis 3, wobei der Schritt (iv) des Schweißens im Lichtbogenschweißverfahren mit einer nicht schmelzbaren Elektrode, gegebenenfalls in Gegenwart eines Zusatzwerkstoffs, erfolgt.

5. Verfahren nach einem der Ansprüche 1 bis 4, das ferner einen Schritt des Reinigens der Oberflächen des ersten Blechs und der Oberflächen des zweiten beschichteten Blechs umfasst, wobei dieser Reinigungsschritt vor dem Schritt (ii) oder (ii') des Verbindens durchgeführt wird.

6. Verfahren nach einem der Ansprüche 1 bis 5, ferner umfassend einen Schritt des Schleifens des ersten und des zweiten Blechs, wobei dieser Schleifschritt vor dem Schritt (ii) oder (ii') des Verbindens durchgeführt wird.

7. Verfahren nach einem der Ansprüche 1 bis 6, ferner umfassend mindestens einen Schritt des Schleifens der Verbindung, wobei dieser bzw. diese Schleifschritte vor dem Schritt (iv) des Verschweißens und/oder vor dem Schritt (v) der Wärmebehandlung durchgeführt wird.

8. Verfahren nach einem der Ansprüche 1 bis 7, das keinen Entgasungsschritt zwischen dem Schritt (iii) des maschinellen Pressens und dem Schritt (iv) des Verschweißens und/oder zwischen dem Schritt (iv) des Verschweißens und dem Schritt (v) der Wärmebehandlung umfasst.

9. Verfahren nach einem der Ansprüche 1 bis 8, wobei das erste und das zweite Blech aus einem Material bestehen, das Eisen umfasst, wobei dieses Material vorteilhafterweise aus Eisen Fe⁰ und Stahl ausgewählt ist.

10. Verfahren nach einem der Ansprüche 1 bis 9, wobei die Materialien des ersten und zweiten Blechs identisch sind.

11. Verfahren nach einem der Ansprüche 1 bis 10, wobei die Dicken e₁ und e₂ des ersten und des zweiten Blechs zwischen 1 mm und 30 mm, vorteilhafterweise zwischen 1 mm und 5 mm und vorzugsweise zwischen 1 mm und 2 mm liegen.

## Claims

1. Method for manufacturing a double-layer heat-exchange wall comprising a first layer and a second layer, the first and second layers being metallic, this manufacturing method being **characterised in that** it comprises the following successive steps (i) to (v), and optionally (vi):
(i) the provision:
. of a first metal sheet intended to form the first layer and having a thickness e₁,
. of a second metal sheet intended to form the second layer and having a thickness e₂, and
. of a leaf of iron Fe⁰ having a thickness e₃ of between 10 µm and 100 µm and, advantageously, between 50 µm and 100 µm;
(ii) the assembly of the first and second metal sheets and the leaf of iron Fe⁰, the leaf being interposed between the first and second metal sheets,
(iii) the mechanical pressing of the assembly obtained at the end of the previous step at a minimum pressure of 1 MPa;
(iv) the peripheral welding of the pressed assembly obtained at the end of step (iii);
(v) the heat treatment of the welded assembly obtained at the end of step (iv), this heat treatment being implemented by hot isostatic pressing conducted at a temperature of between 800°C and 1200°C, at a pressure of between 10⁸ Pa and 2.10⁸ Pa, for a period of between 1 hour and 3 hours;
and, optionally,
(vi) a supplementary treatment such as curving, bending, quenching, normalised ageing or annealing.

2. Method according to claim 1, wherein steps (i) and (ii) are respectively replaced by the following steps (i') and (ii'):
(i') the provision:
. of a first metal sheet intended to form the first layer and having a thickness e₁, and
. of a second metal sheet intended to form the second layer and having a thickness e₂, this second metal sheet comprising, on one of its surfaces, a coating of iron Fe⁰, this coating having a thickness e₃ of between 10 µm and 100 µm and, advantageously, between 50 µm and 100 µm, the coated second metal sheet having a thickness e_{2'} such that e_{2'} = e₂ + e₃; and
(ii') the assembly of the first metal sheet and of the coated second metal sheet, the coating of iron Fe⁰ being placed between the first and second metal sheets.

3. Method according to claim 2, wherein the coating of iron Fe⁰ is obtained by cold spraying of iron powder Fe⁰ on one of the surfaces of the second metal sheet.

4. Method according to any one of claims 1 to 3, wherein the welding step (iv) is implemented by an arc welding method with a non-meltable electrode, where appropriate in the presence of a filler metal.

5. Method according to any one of claims 1 to 4, further comprising a step of cleaning the surfaces of the first metal sheet and the surfaces of the coated second metal sheet, this cleaning step being implemented prior to the assembly step (ii) or (ii').

6. Method according to any one of claims 1 to 5, further comprising a step of grinding the first and second metal sheets, this grinding step being implemented prior to the assembly step (ii) or (ii').

7. Method according to any one of claims 1 to 6, further comprising at least one step of grinding the assembly, this or these grinding steps being implemented prior to the welding step (iv) and/or prior to the heat treatment step (v).

8. Method according to any one of claims 1 to 7, which does not comprise a degassing step between the mechanical pressing step (iii) and the welding step (iv) and/or between the welding step (iv) and the heat treatment step (v).

9. Method according to any one of claims 1 to 8, wherein the first and second metal sheets are produced from a material comprising iron, this material advantageously being selected from iron Fe⁰ and a steel.

10. Method according to any one of claims 1 to 9, wherein the materials of the first and second metal sheets are identical.

11. Method according to any one of claims 1 to 10, wherein the thicknesses e₁ and e₂ of the first and second metal sheets are between 1 mm and 30 mm, advantageously between 1 mm and 5 mm, and preferentially between 1 mm and 2 mm.
